# EUROPÄISCHE PATENTANMELDUNG

(11) **EP 2 400 473 A1**
(43) Veröffentlichungstag der Anmeldung: **28.12.2011**
(21) Anmeldenummer: 11004747.9
(22) Anmeldetag: 10.06.2011
(51) Int. Cl.: G08G 1/16, G06K 9/00, G06T 7/00

(54) **Verfahren und Vorrichtung zum Unterstützen eines Fahrzeugführers**

(30) Priorität: 28.06.2010 DE 102010025351
(71) Anmelder: Audi AG, 85045 Ingolstadt (DE)
(72) Erfinder: Popken, Markus, 85080 Gaimersheim (DE)
(74) Vertreter: Thielmann, Frank

(57) **Zusammenfassung**

Die Erfindung betrifft ein Verfahren zum Unterstützen eines Fahrzeugführers eines Kraftwagens (1) mit den Schritten
- Erfassen mindestens eines visuellen Merkmals eines Objekts (4, 5, 6, 7,-9-, 10);
- Zuordnen des Objekts (4, 5, 6, 7, 9, 10) zu einer von mindestens zwei Objektkategorien gemäß einer ersten vorgegebenen Bewertung anhand des mindestens einen visuellen Merkmals, wobei für eine erste der mindestens zwei Objektkategorien ein Unterstützen des Fahrzeugführers als notwendig eingestuft ist und für eine zweite der mindestens zwei Objektkategorien ein Unterstützen des Fahrzeugführers als nicht notwendig eingestuft ist;
- Zuordnen des Objekts (10) der zweiten Objektkategorie auf Grundlage seines mindestens einen visuellen Merkmals in eine Unterkategorie nach einer zweiten vorgegebenen Bewertung; und
- Unterstützen des Fahrzeugführers gemäß der Unterkategorie.

Die Erfindung betrifft auch eine Vorrichtung zum Unterstützen eines Fahrzeugführers.

## Beschreibung

Die Erfindung betrifft ein Verfahren zum Unterstützen eines Fahrzeugführers nach dem Oberbegriff des Patentanspruchs 1 sowie eine Vorrichtung zum Unterstützen eines Fahrzeugführers nach dem Oberbegriff des Patentanspruchs 8.

Um die Sicherheit im Straßenverkehr zu erhöhen, werden in Kraftwägen zunehmende elektronische Systeme eingesetzt, die den Fahrzeugführer darin unterstützen, auf gefährliche Situationen geeignet zu reagieren. Einige Systeme greifen sogar direkt in das Fahrzeugverhalten ein, ohne den Fahrzeugführer zu beteiligen. Solche Fahrerassistenzsysteme erkennen beispielsweise über bildverarbeitende Mustererkennung das Heck vorrausfahrender Fahrzeuge und liefern dem Fahrzeugführer Warnhinweise, wenn z.B. ein gebotener Mindestabstand unterschritten wird. Bildverarbeitungssysteme sind darüber hinaus auch in der Lage, Verkehrsschilder zu erkennen und sie aufgrund ihrer einfachen grafischen Gestaltung zu lesen. Auch andere Gegenstände sind erkennbar, sofern das System darauf ausgelegt wird und sich der Gegenstand aus Sicht der Bildverarbeitung eindeutig beschreiben lässt.

Da Unfälle zwischen Fußgängern und Kraftwägen besonders verheerende Folgen haben, ist ein Einsatz von Fahrerassistenzsystemen zum Schutz von Personen auf der Fahrbahn wünschenswert. Aus der DE 100 41 714 A1 ist eine Vorrichtung zur Detektion und Identifikation von Objekten bekannt, welche sich in den Verkehrsraum eines Fahrzeugs hineinbewegen und mit diesem auf Kollisionskurs sind. Die Vorrichtung sendet hierzu ein Kennungssignal aus, welches im Fahrzeug detektiert wird und dort eine Warnung an den Fahrer oder z.B. eine automatische Bremsung auslöst. Die Vorrichtung wird hierzu am jeweiligen Objekt, z.B. einem Ball oder einem Kleidungsstück eines Kindes, angebracht und ist vorzugsweise so kodiert, dass das Kennungssignal objektspezifische Informationen enthält und so eine ldentifikation des Objekts erlaubt.

Daneben sind auch bildverarbeitende Systeme bekannt, welche das Erkennen von Personen im Straßenverkehr, z.B. Fußgängern, erlauben. Da Menschen bzgl. ihrer Größe und Physiognomie stark variieren, ist eine eindeutige Identifikation meist schwierig. Die automatische Bilderkennung versagt häufig bei Personen, die stark von einer vorgegebenen Norm abweihen, z.B. sehr kleinen Menschen (z.B. Kindern). Beispielsweise kann auch die Entfernung bei unbekannter Größe des Menschen nicht mehr korrekt eingeschätzt werden. Es wird nämlich von einer Normgröße ausgegangen und hieraus der Abstand zwischen Mensch und Kamera bestimmt. Andere Abweichungen, die ein Erkennen von Menschen .durch eine automatische Bilderkennung erschweren, sind beispielsweise das bildliche "Verschmelzen" mehrerer Objekte (z.B. Personengruppen; Personen, die ein Gerät betätigen oder Gegenstände tragen), ungewöhnliche Körperhaltungen (z.B. kauern, hocken) und Teilverdeckungen (z.B. Person hinter einem Auto).

Es ist Aufgabe der Erfindung, Gefahrensituationen im Straßenverkehr effektiver zu vermeiden.

Diese Aufgabe wird durch ein Verfahren, welches die Merkmale des Patentanspruchs 1 aufweist, sowie eine Vorrichtung mit den Merkmalen des Patentanspruchs 8 gelöst.

Das erfindungsgemäße Verfahren unterstützt einen Fahrzeugführer eines Kraftwagens beim Führen dieses Kraftwagens. Hierzu sind mehrere Verfahrensschritte vorgesehen. Es wird mindestens ein visuelles Merkmal eines Objekts erfasst. Bei dem Objekt handelt es sich insbesondere um einen Gegenstand, der sich in dem Verkehrsraum befindet, innerhalb dessen sich der Kraftwagen bewegt. Beispielsweise fährt der Kraftwagen auf einer Straße und das Objekt ist ein Gegenstand, der auf oder neben der Straße steht oder sich auf oder neben der Straße bewegt. Das Objekt ist insbesondere ein potentielles Kollisionsobjekt für den Kraftwagen. Namentlich kann es sich bei dem Objekt um einen Kraftwagen, ein Fahrrad, ein Kinderfahrzeug, ein Tier, ein Spielzeug, einen Ball, einen Menschen, ein Verkehrszeichen, eine Fahrbahnbegrenzung, einen Strauch, einen Baum etc. handeln. Das Objekt befindet sich insbesondere im Fahrzeugvorfeld, also im Raum in Fahrtrichtung vor dem Kraftwagen. Unter einem visuellen Merkmal ist insbesondere ein optisch erkennbares Charakteristikum des Objekts zu verstehen, also insbesondere eine Objektgestalt, welche unter Beleuchtung mit sichtbarem Licht hervortritt. Bei dem visuellen Merkmal kann es sich jedoch auch um ein Merkmal handeln, das unter aktiver Lichtemission des Objekts selbst (z.B. Scheinwerfer) oder unter Emission und/oder Streuung von nicht sichtbarem Licht (z.B. Infraroteigenstrahlung bzw. Beleuchtung mit Infrarotlicht) hervortritt. Das zumindest eine visuelle Merkmal kann beispielsweise mit einem geeigneten Detektor, z.B. einer Kamera, erfasst werden.

Beispielsweise wird mit dem geeigneten Detektor ein Bild des gesamten Fahrzeugvorfeldes erfasst, wobei sich das Objekt im Sichtbereich des Detektors und damit auf dem erfassten Bild befindet. Das Erfassen beinhaltet dann insbesondere auch ein Identifizieren des mindestens einen visuellen Merkmals, beispielsweise durch eine geeignete automatische Bildverarbeitung. Im Rahmen einer solchen Bildverarbeitung wird das Bild insbesondere dahingehend analysiert, dass geeignete Muster identifiziert werden, welche ein Erfassen des wenigstens einen visuellen Merkmals erlauben.

In einem weiteren Schritt des erfindungsgemäßen Verfahrens erfolgt ein Zuordnen des Objekts zu einer von mindestens zwei Objektkategorien gemäß einer ersten vorgegebenen Bewertung anhand des mindestens einen visuellen Merkmals. Unter den mindestens zwei Objektkategorien gibt es eine erste Objektkategorie für Objekte, für die ein Unterstützen des Fahrzeugführers als notwendig eingestuft ist. Daneben gibt es auch noch eine zweite Objektkategorie, in die Objekte eingeordnet werden, bezüglich derer ein Unterstützen des Fahrzeugführers als nicht notwendig eingestuft ist. Die vorgegebene Bewertung stellt also eine festgelegte Zuordnungsvorschrift für Objekte zu einer Objektkategorie dar. Ein Objekt kann einer oder mehreren Objektkategorien zugeordnet werden. Ein Objekt kann anhand eines ersten visuellen Merkmals einer Objektkategorie und anhand eines zweiten visuellen Merkmals einer anderen Objektkategorie zugeordnet werden. Vorzugsweise erfolgt die Zuordnung eines Objekts zu einer Objektkategorie jedoch eindeutig. Einer Objektkategorie werden insbesondere mehrere Objekte zugeordnet.

Beispielsweise sind drei Objektkategorien festgelegt: (A) Warnobjekte, (B) Gefahrenobjekte und (C) sonstige Objekte. Die Objektkategorie (A) ist dann z.B. eine erste Objektkategorie für Objekte, für die ein Unterstützen des Fahrzeugführers als notwendig eingestuft ist. Für Objekte der Objektkategorie (A) soll z.B. das Unterstützen durch ein Warnen erfolgen. Ferner ist die Objektkategorie (C) z.B. eine zweite Objektkategorie für Objekte, für die kein Unterstützen des Fahrzeugführers als notwendig eingestuft ist. Für Objekte der Objektkategorie (C) ist zunächst kein Unterstützen des Fahrzeugführers vorgesehen. Die Objektkategorie (B) ist z.B. eine weitere Objektkategorie für Objekte, für die ein Unterstützen des Fahrzeugführers als notwendig eingestuft ist. Für Objekte der Objektkategorie (B) soll z.B. das Unterstützen durch ein automatisches Abbremsen eines Kraftwagens erfolgen. Bei einem ersten zuzuordnenden Objekt handelt es sich beispielsweise um das Verkehrsschild "Stopp", dessen charakteristische achteckige Kontor als visuelles Merkmal im Rahmen des Verfahrens erfasst ist. Gemäß einer vorgegebenen Bewertung erfolgt aufgrund der achteckigen Kontur eine Zuordnung zur Objektkategorie (A). Bei einem zweiten zuzuordnenden Objekt handelt es sich beispielsweise um einen Fußgänger, dessen Extremitäten als visuelle Merkmale im Rahmen des Verfahrens erfasst sind. Gemäß einer vorgegebenen Bewertung erfolgt aufgrund der Extremitäten eine Zuordnung zur Objektkategorie (B). Bei einem dritten zuzuordnenden Objekt handelt es sich beispielsweise um einen Ball, dessen runde Kontur als visuelles Merkmal im Rahmen des Verfahrens erfasst ist. Gemäß einer vorgegebenen Bewertung erfolgt aufgrund der runden Kontur eine Zuordnung zur Objektkategorie (C). Bei einem vierten zuzuordnenden Objekt handelt es sich beispielsweise um einen Fuchs, dessen Schwanz und rote Farbe als visuelle Merkmale im Rahmen des Verfahrens erfasst sind. Gemäß einer vorgegebenen Bewertung erfolgt aufgrund des Schwanzes und der roten Farbe eine Zuordnung zur Objektkategorie (C).

Gemäß dem erfindungsgemäßen Verfahren erfolgt in einem weiteren Verfahrensschritt das Zuordnen des Objekts der zweiten Objektkategorie aufgrund seines mindestens einen visuellen Merkmals in eine Unterkategorie nach einer zweiten vorgegebenen Bewertung. Es können insbesondere mehrere_{'} Unterkategorien, insbesondere auch mehr als zwei Unterkategorien vorgesehen sein. Es kann vorgesehen sein, dass für Objekte mit mehr als einem erfassten visuellen Merkmal, das Zuordnen in eine Unterkategorie auf Grundlage eines anderen visuellen Merkmals erfolgt als das Zuordnen zur übergeordneten Objektkategorie. Auch die Unterkategorie ist eine Objektkategorie. Die zweite vorgegebene Bewertung ist insbesondere von der ersten vorgegebenen Bewertung verschieden.

Entsprechend einem letzten Verfahrensschritt ist ein Unterstützen des Fahrzeugführers gemäß der jeweiligen Unterkategorie vorgesehen. Das Unterstützen kann insbesondere in einem Warnen des Fahrzeugführers und/oder in einem direkten Eingriff in die Fahreigenschaften des Kraftwagens bestehen.

Beispielsweise sind zwei Unterkategorien festgelegt: (C1) Vorbote und (C2) kein Vorbote. Für Objekte, die der Unterkategorie (C1) zugeordnet werden erfolgt z.B. ein Unterstützen des Fahrzeugführers, beispielsweise durch ein automatisches Abbremsen des Kraftwagens. Für Objekte, die der Unterkategorie (C2) zugeordnet werden erfolgt z.B. ein Unterstützen des Fahrzeugführers, beispielsweise durch ein akustisches Warnsignal. Das dritte und vierte zuzuordnende Objekt aus obigem Beispiel (Ball bzw. Fuchs) sind der Objektkategorie (C) zugeordnet. Bei dem Ball ist als visuelles Merkmal dessen runde Kontur erfasst. Gemäß einer zweiten vorgegebenen Bewertung erfolgt aufgrund der runden Kontur eine Zuordnung zur Unterkategorie (C1). Bei dem Fuchs sind als visuelle Merkmale dessen Schwanz und rote Farbe erfasst. Gemäß einer zweiten vorgegebenen Bewertung erfolgt aufgrund des Schwanzes eine Zuordnung zur Objektkategorie (C2).

Das erfindungsgemäße Verfahren ist zweistufig. Nach dem Stand der Technik erfolgte bisher in einer ersten Zuordnungsstufe lediglich eine Differenzierung zwischen Objekten, die ein direktes Unterstützen des Fahrzeugführers notwendig erscheinen ließen und Objekten, die als "harmlos" eingruppiert wurden und für die keine Fahrerunterstützung vorgesehen war. Das erfindungsgemäße Verfahren erweitert das aus dem Stand der Technik bekannte Verfahren um einen zusätzlichen Zuordnungsschritt. Damit lassen sich z.B. bisher als "harmlos" eingestufte Objekte als Indikatoren oder Vorboten für potentielle Gefahrensituationen identifizieren. Im Rahmen des oben angeführten Beispiels ist ein Ball gemäß der ersten Zuordnung nach dem Stand der Technik als "harmlos" in die Objektkategorie "(C) sonstige Objekte" eingruppiert. Es ist eine Kernidee der vorliegenden Erfindung, dass durch Einführen eines weiteren Zuordnungsschritts eine feinere Untergliederung möglich wird. Gemäß einer zweiten Zuordnungsvorschrift wird der Ball als potentieller Vorbote für ein vor den Kraftwagen laufendes Kind erkannt und in die Unterkategorie "(C1) Vorbote" eingruppiert. Für Objekte dieser Unterkategorie erfolgt ein Unterstützen des Fahrzeugführers, z.B. indem er auf die potentielle Gefahrensituation aufmerksam gemacht wird. Damit können Gefahrensituationen im Straßenverkehr effektiver vermieden werden. Fehlerhafte, zu oberflächliche oder naive Eingruppierungen erfasster Situationen werden vermieden. Die visuellen Merkmale eines Objekts werden intelligenter bewertet und gewichtet. Ein Unterstützen des Fahrzeugführers ist auch bei zunächst harmlos und ungefährlich erscheinenden Situationen möglich. Der Fahrzeugführer wird also in Fahrsituationen durch ein intelligentes Verfahren unterstützt, das ihm hilft, auch schwer überschaubare und bewertbare Situationen einzuschätzen. Erkennt ein Fahrzeugführer beispielsweise einen auf die Straße rollenden Ball nicht als potentielle Gefahrensituation, da von einem Ball selbst ja keine Gefahr ausgeht, kann ihm durch das vorgeschlagene Verfahren bei der Bewertung der Lage geholfen werden.

Vorzugsweise betrifft das Verfahren insbesondere solche Objekte, die sich wenigstens abschnittsweise senkrecht oder quer zur Fahrtrichtung eines Kraftwagens bewegen. Ein solches Objekt hat zumindest zu einem bestimmten Zeitpunkt einen Geschwindigkeitsvektor mit einer zum Fahrtrichtungsvektor des Kraftwagens senkrechten Komponente. Das ist insbesondere dann der Fall, wenn ein Kraftwagen entlang einer Fahrbahn fährt und sich ein Objekt über den Fahrbahnrand hinweg auf die Fahrbahn bewegt. Solche Objekte sind für Fahrzeugführer besonders schwer einzuschätzen, da sie relativ plötzlich in das Sichtfeld des Fahrzeugführers treten und gegebenenfalls eine besonders unmittelbare Reaktion erfordern. Die Vorzüge des den Fahrzeugführer unterstützenden Verfahrens treten dann besonders zu Tage und Unfälle lassen sich besonders effektiv vermeiden.

Vorzugsweise ist das mindestens eine visuelle Merkmal des Objekts durch dessen Form und/oder seine räumliche Position und/oder seine Oberflächenbeschaffenheit bzw. Textur und/oder seine Farbe bzw. Farbgestaltung (z.B. Muster) gegeben. Die Form eines Objekts lässt sich beispielsweise über eine automatisierte Kantenerkennung erfassen. Über die Form lässt sich dann insbesondere auf die Gattung des Objekts oder sogar auf das Objekt selbst schließen. Auch bestimmte Farben deuten in bestimmten Umgebungen auf ungewöhnliche Objekte hin und erleichtern eine Zuordnung. Darüber hinaus lässt auch die Oberflächenbeschaffenheit Rückschlüsse zu. Reflektierende Oberflächen sind z.B. charakteristisch für künstliche Objekte (z.B. Fahrzeuge) und z.B. bei Tieren eher ungewöhnlich. Auch zeitliche Änderungen dieser Größen, also Formänderungen, Farbänderungen, Änderungen der Oberflächenbeschaffenheit können als visuelle Merkmale herangezogen werden. Schließlich erlauben auch Positionsänderungen, also Trajektorien eines Objekts, Rückschlüsse auf das Objekt selbst, beispielsweise darauf, ob es elastisch ist oder nicht. Diese visuellen Merkmale erlauben eine besonders gute Zuordnung der Objekte zu den Objekt- bzw. Unterkategorien und damit ein differenziertes Unterstützen des Fahrzeugführers. Vorzugsweise werden mehr als eines der vorgenannten visuellen Merkmale erfasst und für das Zuordnen herangezogen. Dann ist die Zuordnung besonders fehlertolerant und/oder es ist eine Unterteilung in besonders viele Objekt- bzw. Unterkategorien möglich. Dann kann der Fahrzeugführer sehr differenziert unterstützt werden.

Weiterhin ist es bevorzugt, wenn das Unterstützen des Fahrzeugführers wenigstens umfasst, den Fahrzeugführer über akustische und/oder optische Signale zu warnen. Ein optisches Warnsignal kann beispielsweise durch eine Anzeige im Armaturenbrett des Kraftwagens oder eine Warnieuchte im Sichtfeld des Fahrzeugführers realisiert sein. Akustisch kann eine Warnung über einen Lautsprecher erfolgen. Durch ein solches. Warnsignal kann der Fahrzeugführer auf eine potentielle Gefahrensituation aufmerksam gemacht werden und er kann z.B. selbst entscheiden, wie er darauf reagieren möchte. Die Warnung kann insbesondere auch darin bestehen, dem Fahrzeugführer einen Handlungsvorschlag zu unterbreiten oder ihm Informationen über die potentielle Gefahr zukommen zu lassen. Die Warnung kann auch in einer Information über die Art des erfassten Objekts und/oder einer Information über die Art der Gefahr, die das Objekt indiziert, bestehen. Eine solches Unterstützen durch Warnen erlaubt es dem Fahrzeugführer, eine informierte Entscheidung zu treffen und situationsgerecht zu reagieren.

Zusätzlich oder alternativ ist es bevorzugt, dass das Unterstützen des Fahrzeugführers umfasst, einen Abbremsvorgang des Kraftwagens zumindest einzuleiten. Der Abbremsvorgang kann vorbereitet, eingeleitet oder teilweise oder vollständig durchgeführt werden. Beispielsweise wird die Bremse des Kraftwagens vorgespannt und/oder ein Bremsdruck ausgelöst und/oder der Kraftwagen abgebremst. Dies ist besonders dann von Vorteil, wenn die Reaktionszeit des Fahrers erwarten lässt, dass ein Unfall ohne ein automatisches Eingreifen nicht mehr verhindert werden kann. Auch in besonders schweren Gefahrensituationen kann vorgesehen sein, dass der Kraftwagen selbsttätig reagiert und dem Fahrzeugführer eine Entscheidung abgenommen wird. Ein solches Unterstützen ist besonders in Situationen angezeigt, die von einem Fahrzeugführer nur schwer interpretiert werden können oder bei denen eine menschliche Interpretation zu lange dauern würde. Wenn der Fahrzeugführer z.B. einen auf die Straße rollenden Ball erkennt, muss er zunächst den gedanklichen Schritt vollziehen, dass dem Ball ein Kind folgen könnte. Die Gefahr ist für den Fahrzeugführer also nur indirekt erkennbar. Er benötigt eventuell für den erforderlichen gedanklichen Schritt zu lange, um eine mögliche Kollision noch abzuwenden. Dann tritt die Stärke des vorgeschlagenen Verfahrens besonders zu Tage, da es in der Lage ist, die Situation ausreichend schnell zu bewerten und vorzugsweise den Kraftwagen automatisch abzubremsen, bevor es zu einer Kollision mit dem Kind kommt. Weiterhin ist es bevorzugt, wenn die erste Objektkategorie zu Objekten gehört, die unmittelbar durch den Kraftwagen gefährdet sind und/oder eine unmittelbare Gefahr für den Kraftwagen darstellen. Für Objekte einer solchen Objektkategorie ist ein direktes und sofortiges Unterstützen des Fahrzeugführers besonders notwenig. Objekte, die unmittelbar durch den Kraftwagen gefährdet sind, sind beispielsweise Fußgänger auf einer Fahrbahn und andere Fahrzeuge, z:B. Fahrräder, Mopeds etc. Objekte, die eine unmittelbare Gefahr für den Kraftwagen darstellen sind z.B. große Wildtiere oder andere Kraftwägen. Den Objekten ist insbesondere gemeinsam, dass für einen Fahrzeugführer direkt erkennbar ist, dass von ihnen eine Gefahr ausgeht. Vorzugsweise erfolgt das Zuordnen gemäß der zweiten vorgegebenen Bewertung in genau zwei Unterkategorien. Die erste der beiden Unterkategorien umfasst Objekte, denen eine potentielle Gefahrensituation zugeordnet ist. Dies sind insbesondere Objekte, deren Gefahrenpotential weniger direkt ist und die demgemäß im Schritt des ersten Zuordnens in die zweite Objektkategorie eingeordnet wurden, für die ein Unterstützen des Fahrzeugführers als nicht notwendig erachtet wurde. Im Schritt des zweiten Zuordnens erfolgt insbesondere eine detailliertere und genauere Betrachtung, die für Objekte der ersten Unterkategorie zu der Erkenntnis führt, dass sie eine mögliche Gefahr indizieren. Die zweite der beiden Unterkategorien umfasst Objekte, denen keine potentielle Gefahrensituation zugeordnet ist. Das sind dann insbesondere die Objekte der zweiten Objektkategorie, für die im Zuge der detaillierteren Bewertung des zweiten Zuordnungsschritts keine Neueinschätzung der Gefährdungslage erfolgt ist. Für Objekte der ersten Unterkategorie erfolgt ein Unterstützen des Fahrzeugführers; für Objekte der zweiten Unterkategorie erfolgt kein Unterstützen.

Im bereits ausgeführten Beispiel sind die Objekte "Ball" und "Fuchs" genau zwei Unterkategorien zugeordnet. Aufgrund seines visuellen Merkmals ist der Ball der Unterkategorie (C1) zugeordnet. Die Kategorie (C1) ist ein Beispiel für die erste Unterkategorie mit potentiell gefahrindizierenden Objekten. Auf einen Ball kann nämlich ein Kind folgen. Es erfolgt eine Unterstützung des Fahrzeugführers, z.B. durch ein automatisches Abbremsen des Kraftwagens. Aufgrund seines visuellen Merkmals ist der Fuchs der Unterkategorie (C2) zugeordnet. Die Kategorie (C2) ist ein Beispiel für die zweite Unterkategorie mit nicht gefahrindizierenden Objekten. Es ist unwahrscheinlich, dass auf einen Fuchs ein Kind folgt. Es erfolgt kein Unterstützen des Fahrzeugführers.

Ferner erfolgt das Zuordnen des Objekts zu einer Objektkategorie und/oder Unterkategorie bevorzugt über einen Algorithmus. Der Algorithmus kann ein Bilderkennungs- und/oder Mustererkennungs- und/oder Entscheidungsalgorithmus sein. Die Zuordnung erfolgt also insbesondere vollautomatisch und damit besonders effektiv und schnell. Der Algorithmus wird insbesondere auf einer Datenverarbeitungsanlage ausgeführt. Hierdurch ist eine sichere und reproduzierbare Zuordnung gegeben. Der Algorithmus greift beispielsweise auf eine Datenbank zu, in der den visuellen Merkmalen Objekt- bzw. Unterkategorien zugeordnet sind. Die erste bzw. zweite vorgegebene Bewertung ist dann anhand der in der Datenbank abgelegten Zuordnungsvorschriften realisiert. Die vorgegebenen Bewertungen können durch Entscheidungen einer Bedienperson erfolgt sein, Die Bedienperson kann auch die Datenbank erstellt haben, auf Basis derer das Zuordnen erfolgt.

Des Weiteren betrifft die Erfindung eine Vorrichtung, insbesondere für einen Kraftwagen, zum Unterstützen eines Fahrzeugführers. Die Vorrichtung umfasst:
1) eine Erfassungseinrichtung zum Erfassen mindestens eines visuellen Merkmals eines Objekts. Die Erfassungseinrichtung weist insbesondere einen Sensor bzw. Detektor auf, welcher dazu ausgebildet ist, das wenigstens eine visuelle Merkmal des Objekts zu detektieren. Die Erfassungseinrichtung arbeitet insbesondere auf Grundlage optischer Prinzipien. Sie kann aber auch nicht optisch, z.B. unter Zuhilfenahme von (Ultra-)Schall arbeiten, sofern sie dazu in der Lage ist, z.B. ein für einen Menschen visuell erkennbares Merkmal des Objekts zu erfassen bzw. zu rekonstruieren. Ein visuelles Merkmal ist beispielsweise die Form bzw. Gestalt eines Objekts. Dieses visuelle Merkmal kann z.B. auch nicht-visuell, z.B. über Uitraschall, von der Erfassungseinrichtung erfasst werden. Insbesondere kann die Erfassungseinrichtung Signale, vorzugsweise elektrische Signale, an die Zuordnungseinrichtung senden;
2) eine erste Zuordnungseinrichtung zum Zuordnen des Objekts zu einer von mindestens zwei Obiektkateoorien gemäß einer ersten vorgegebenen Bewertung anhand des mindestens einen visuellen Merkmals, wobei für eine erste der mindestens zwei Objektkategorien ein Unterstützen des Fahrzeugführers als notwendig eingestuft ist und für eine zweite der mindestens zwei Objektkategorien ein Unterstützen des Fahrzeugführers als nicht notwendig eingestuft ist. Die Zuordnungseinrichtung umfasst insbesondere eine Datenverarbeitungseinrichtung bzw. einen Computer und/oder integrierte Schaltkreise und/oder Halbleiterbauteile und/oder elektronische Baukomponenten;
3) eine zweite Zuordnungseinrichtung zum Zuordnen des Objekts der zweiten Objektkategorie auf Grundlage seines mindestens einen visuellen Merkmals in eine Unterkategorie nach einer zweiten vorgegebenen Bewertung. Die zweite Zuordnungseinrichtung kann insbesondere mit der ersten Zuordnungseinrichtung identisch sein oder durch ähnliche bauliche Komponenten realisiert sein. Die Schritte der ersten und zweiten Zuordnung können insbesondere durch unterschiedliche Algorithmen bzw. Softwareprogramme und/oder unterschiedliche Schaltungskomponenten realisiert sein. Die Zuordnungseinrichtungen senden insbesondere elektrische Signale an die Unterstützungseinrichtung; und
4) eine Unterstützungseinrichtung zum Unterstützen des Fahrzeugführers gemäß der Unterkategorie. Die Unterstützungseinrichtung ist insbesondere eine Einrichtung, welche steuernd und/oder regelnd auf einen Kraftwagen, z.B. über Aktoren, einwirkt und/oder Signaleinrichtungen umfasst, welche Informationen an einen Fahrzeugführer übermitteln.

Vorzugsweise umfasst die Erfassungseinrichtung eine Kamera, z.B. eine CCD- (Charge Coupled Device) oder CMOS- (Complementary Metal Oxide Semiconductor) Kamera. Mit einer Kamera lassen sich die visuellen Merkmale eines Objekts besonders direkt erfassen, da auch das Erfassen optisch bzw. visuell stattfindet. Als weiterer Schritt des Erfassens können dann z.B. bildverarbeitende Algorithmen direkt auf das von der Kamera aufgenommene Bild angewandt werden. Vorzugsweise hat die Kamera eine hohe Auflösung, kann Farben unterscheiden und eine hohe Anzahl von Bildern pro Sekunde aufnehmen. Dann lassen sich auch Bilddetails und folglich besonders aussagekräftige visuelle Merkmale eines Objekts erfassen.

Vorzugsweise umfasst die Unterstützungseinrichtung eine Warn- und/oder Bremseinrichtung. Die Warneinrichtung dient zur Warnung des Fahrzeugführers und/oder eines Objekts (z.B. eines Fußgängers). Die Warneinrichtung kann z.B. akustische und/oder optische Warnsignale ausgeben, z.B. über einen Lautsprecher und/oder eine Anzeige. Die Bremseinrichtung ist insbesondere dazu ausgebildet, einen Kraftwagen abzubremsen oder wenigstens einen Abbremsvorgang einzuleiten. Sowohl durch eine Warn- als auch durch eine Bremseinrichtung lässt sich die von einem Kraftwagen ausgehende Unfallgefahr verringern.

Die in Bezug auf das erfindungsgemäße Verfahren vorgestellten bevorzugten Ausführungsformen und deren Vorteile gelten entsprechend für die erfindungsgemäße Vorrichtung.

Weitere Merkmale der Erfindung ergeben sich aus- den Ansprüchen, den Figuren und der Figurenbeschreibung. Die vorstehend in der Beschreibung genannten Merkmale und Merkmalskombinationen wie auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1: ein Fahrzeugvorfeld mit Objekten, auf welche nach dem Stand der Technik reagiert wird;
- Fig. 2: ein Fahrzeugvorfeld mit Objekten, auf welche gemäß dem erfin-dungsgemäßen Verfahren bzw. der erfindungsgemäßen Vorrich-tung reagiert wird;
- Fig. 3: eine schematische Draufsicht auf einen Kraftwagen mit einer Vorrichtung nach einer bevorzugten Ausführungsform der Erfin-dung, wobei der Kraftwagen in Relation zu einem Fahrzeugvor-feld mit Objekten gezeigt ist; und
- Fig. 4: ein schematisches Ablaufschema des Verfahrens nach einer be-vorzugten Ausführungsform der Erfindung.

In den Figuren werden gleiche oder funktionsgleiche Elemente mit den gleichen Bezugszeichen versehen.

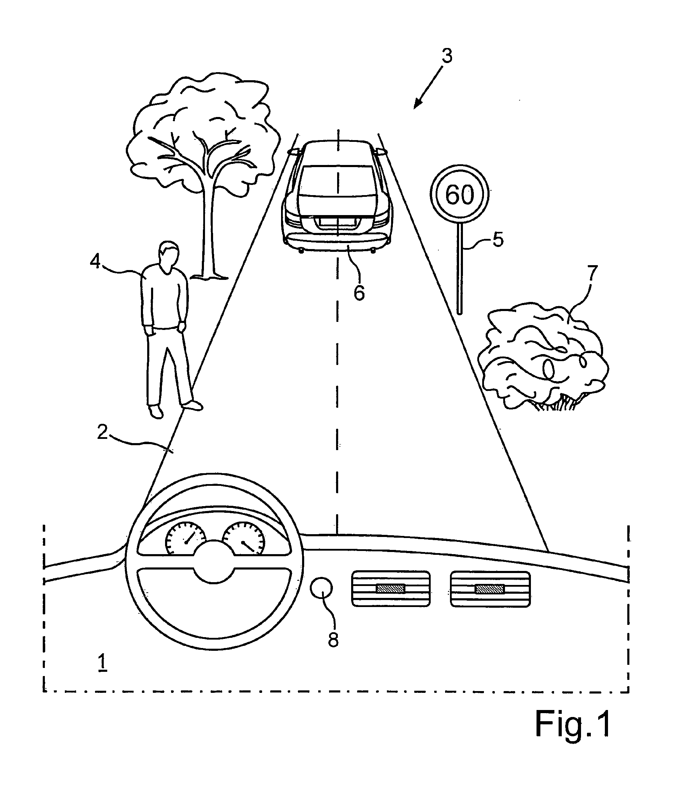

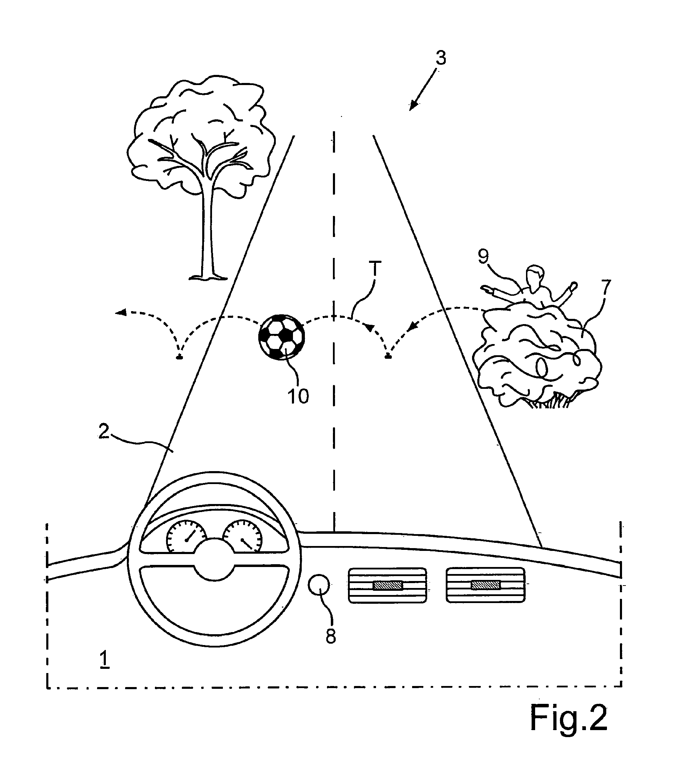

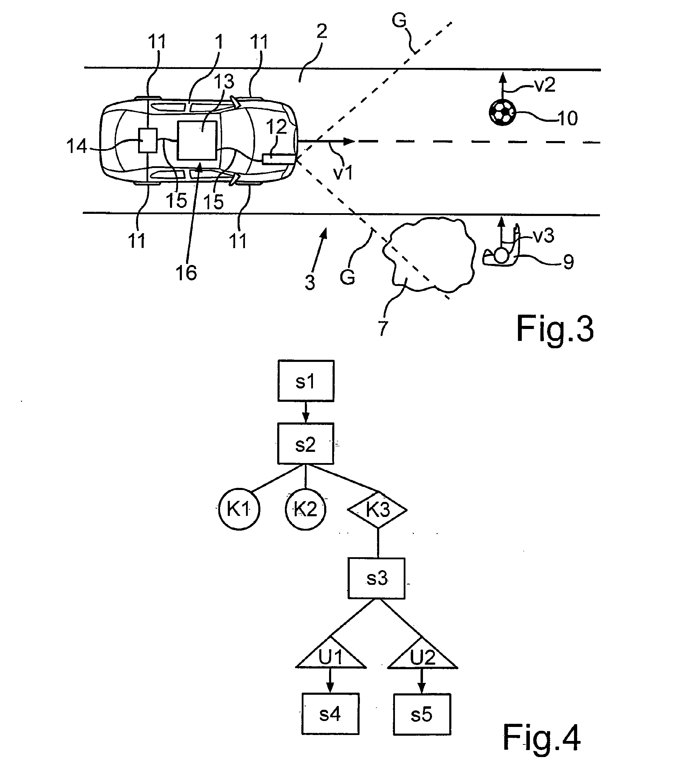

Fig. 1 und 2 zeigen ein Fahrzeugvorfeld 3 aus Sicht eines Fahrzeugführers, welcher sich in der Fahrgastzelle eines Kraftwagens 1 befindet und durch die Frontscheibe in Fahrtrichtung des Kraftwagens 1 blickt. Fig. 3 zeigt eine Aufsicht auf den Kraftwagen 1 der Fig. 2, wobei die Fahrtrichtung des Kraftwagens 1 durch den Richtungsvektor v1 angezeigt ist. Der Kraftwagen 1 bewegt sich auf Rädern 11 entlang einer Fahrbahn 2.

Im Fahrzeugvorfeld 3 befindet sich in der Regel eine Vielzahl von Objekten, welche für eine sichere Fahrt des Kraftwagens 1 von Retevanz sind. Im Ausführungsbeispiel signalisiert ein Verkehrsschild 5 dem Fahrzeugführer, dass eine bestimmte maximale Fahrgeschwindigkeit einzuhalten ist. Vor dem Kraftwagen 1 fährt ein weiteres Fahrzeug 6, zu dem ein gewisser Sicherheitsabstand einzuhalten ist. Schließlich befindet sich im Fahrzeugvorfeld 3 auch noch eine Person 4, welche als Fußgänger vom Fahrbahnrand her die Fahrbahn 2 betritt. Der Fahrzeugführer hat hierauf gegebenenfalls durch ein Abbremsen des Kraftwagens 1 zu reagieren, um eine Kollision mit der Person 4 zu vermeiden. Die Sicht auf den rechten Fahrbahnrand ist für den Fahrzeugführer durch ein Sichthindernis 7, im Ausführungsbeispiel ein Busch, eingeschränkt. Sich aus dem Sichtschutz des Sichthindernisses 7 auf die Fahrbahn 2 herausbewegende Gegenstände werden vom Fahrzeugführer gegebenenfalls erst spät erkannt und stellen deshalb ein erhebliches Gefahrenpotenzial für eine mögliche Kollision mit dem Kraftwagen 1 dar.

Nach dem Stand der Technik gibt es Bildverarbeitungssysteme, die im Kraftwagen 1 installiert sind und dem Fahrzeugführer eine Reaktion auf die Objekte 4, 5 und 6 erleichtern oder abnehmen. Solche Bildverarbeitungssysteme sind z.B. in der Lage, Verkehrsschilder 5 an Hand ihrer äußeren Form, Farbgebung und weiterer Merkmale zu erkennen und zu lesen. Überschreitet der Kraftwagen 1 beispielsweise die auf dem Verkehrsschild 5 angegebene Geschwindigkeitsbegrenzung von 60 km/h, so kann dies dem Fahrzeugführer durch die Warneinrichtung 8 mitgeteilt werden. Das Bildverarbeitungssystem des Kraftwagens 1 in Fig. 1 ist zudem in der Lage, über sogenanntes Pattern-Matching die Heckform eines vorausfahrenden Fahrzeugs 6 automatisch zu erkennen und gegebenenfalls den Abstand zu diesem Fahrzeug automatisch anzupassen. Das Bildverarbeitungssystem in Fig. 1 überwacht das Fahrzeugvorfeld 3 auch auf Personen 4. Die gut sichtbare und physiognomisch durchschnittliche Person 4 kann über ein Bildverarbeitungssystem zur automatischen Fußgängererkennung identifiziert werden und es wird eine Warnung an den Fahrzeugführer über die Warneinrichtung 8 ausgegeben, um eine Kollision der Person 4 mit dem Kraftwagen 1 zu verhindern.

Das aus dem Stand der Technik bekannte Bildverarbeitungssystem der Fig. 1 hat den Nachteil, dass es nicht dazu in der Lage ist, auf Objekte zu reagieren, welche lediglich Vorbote einer Gefahrensituation sind. Das Verkehrsschild 5, das Fahrzeug 6 und die Person 4 erfordern eine unmittelbare Reaktion. Eine auf der Fahrbahn 2 befindliche Person 4, mit der sich der Kraftwagen 1 auf Kollisionskurs befindet, führt zu einer direkten Gefahrensituation. Auch auf das vorausfahrende Fahrzeug 6 muss sofort reagiert werden, um beispielsweise ein Auffahren zu verhindern. Schließlich wird auch die Warnoder Hinweisfunktion eines Verkehrsschildes 5, z.B. eines Stoppschildes, durch das Bildverarbeitungssystem sofort erfasst. Dagegen ist in Fig. 2 ein Ball 10 gezeigt, welcher entlang einer Trajektorie T von rechts nach links über die Fahrbahn 2 rollt bzw. springt. Bildverarbeitungssysteme von aus dem Stand der Technik bekannten Fahrerassistenzeinrichtungen sind nicht in der Lage, solche Situationen als gefährlich zu erkennen und eine Reaktion zu veranlassen.

Dagegen umfasst der Kraftwagen 1 eine Vorrichtung 16 zum Unterstützen des Fahrzeugführers nach einem Ausführungsbeispiel der vorliegenden Erfindung. Diese Vorrichtung 16 ist dazu in der Lage, auch nur mittelbar gefährliche Verkehrssituationen zu erfassen und eine Reaktion des Kraftwagens 1 auszulösen. Im Ausführungsbeispiel der Fig. 2 hat die Trajektorie T des Balls 10 ihren Ursprung hinter dem Sichthindernis 7. Hinter dem Sichthindernis 7 befindet sich ein Kind 9, welches durch das Sichthindernis 7 teilweise verdeckt ist. Bei einer aus dem Stand der Technik bekannten Fahrerassistenzeinrichtung erfolgt bei Vorliegen dieser Situation keine Reaktion. Der Ball 10 wird nicht als gefährliches Objekt identifiziert. Andererseits kann das Bildverarbeitungssystem das Kind 9 nicht also solches erkennen, da seine Gestalt durch das Sichthindernis 7 teilweise verdeckt ist. Im Gegensatz zum Beispiel der Fig. 1 wird also keine Person 4 erkannt und folglich auch kein Warnsignal ausgelöst. Für die Vorrichtung 16 hingegen ist es nicht erforderlich, das Kind 9 überhaupt zu erkennen; es reicht eine Erkennung des Balls 10 aus, um eine Gefahrensituation festzustellen. Der Ball 10 wird als Vorbote für das Kind 9 erkannt. Es ist nämlich wahrscheinlich, dass das Kind 9 dem Ball 10 hinterherläuft und folglich die Fahrbahn 2 betritt. Alternativ kann die Vorrichtung 16 auch dazu ausgelegt sein, andere Objekte als einen Ball 10 zu identifizieren, welche als Vorboten potentiell gefährlicher Verkehrssituationen gelten: Spielzeug, Haustiere, Kinderfahrzeuge (z.B. Bobby-Car) etc.

Die potentielle Gefahrensituation der Fig. 2 ist nochmals in Aufsicht in Fig. 3 gezeigt. Das Kind 9 befindet sich bzgl. der Sichtachse des Fahrzeugsführers hinter dem Sichthindernis 7 und bewegt sich in Richtung des Richtungsvektors v3 seitlich auf die Fahrbahn 2 zu. Es läuft dem Ball 10 hinterher, welcher sich bereits auf der Fahrbahn 2 befindet und sich in Richtung des Richtungsvektors v2 bewegt. Die Richtungsvektoren v2 und_ v3 stehen senkrecht auf der Fahrtrichtung des Kraftwagens 1 mit Richtungsvektor v1. Im Falle, dass der Ball.10 nicht als potentielle Gefahr erkannt wird, wird sich.zu einem späteren Zeitpunkt (als dem in Fig. 3 dargestellten) das Kind 9 bereits auf der Fahrbahn 2 befinden und sich der Kraftwagen in Richtung des Richtungsvektors v1 so weit fortbewegt haben, dass keine Zeit mehr bleibt, um eine Kollision mit dem Kind 9 zu verhindern.

Um eine solche Kollision zu vermeiden, ist der Kraftwagen 1 mit der Vorrichtung 16 ausgestattet, welche eine Erfassungseinrichtung 12, eine Zuordnungseinrichtung 13 und eine Bremseinrichtung 14 umfasst. Die Bremseinrichtung 14 ist mit der Zuordnungseinrichtung 13 über ein Kabel 15 verbunden; ebenso erlaubt ein Kabel 15 das Übertragen elektrischer Signale von er Erfassungseinrichtung 12 auf die Zuordnungseinrichtung 13. Alternativ können jedoch auch kabellose Verbindungen, z.B. Funkverbindungen, vorgesehen sein. Im Ausführungsbeispiel weist die Erfassungseinrichtung 12 eine CCD-Kamera auf, welche die erfassten Bildinformationen an die Zuordnungseinrichtung 13, welche im Ausführungsbeispiel einen Computer umfasst, übermittelt. Diese liefert Signale an die Bremseinrichtung 14, die mit Rädern 11 des Kraftwagens 1 gekoppelt ist, um diese abzubremsen.

Der Ball 10 befindet sich auf der Fahrbahn 2 im Fahrzeugvorfeld 3 sowie innerhalb des Erfassungsbereichs der Erfassungseinrichtung 12, welcher durch die Grenzlinien G schematisch dargestellt ist. Der Erfassungsbereich ist durch das Sichtfeld der Kamera festgelegt. Die Kamera erfasst insbesondere die Kontur, Farbgestaltung und Oberflächenbeschaffenheit des Balls 10. Einzelbilder werden zudem schnell genug hintereinander aufgenommen, um die Bewegung des Balls 10 über die Fahrbahn 2 nachverfolgen, also die Trajektorie T mit hinreichender Genauigkeit aufzulösen. Die von der Kamera aufgenommenen Bildinformationen werden über das Kabel 15 an die Zuordnungseinrichtung 13 weitergeleitet.

Im Computer bzw. der Datenverarbeitungseinrichtung der Zuordnungseinrichtung 13 erfolgt die Verarbeitung der Bildinformationen. Hierzu bedient sich die Zuordnungseinrichtung 13 geeigneter Algorithmen, welche über das Zusammenspiel von Hardware- und Softwarekomponenten implementiert sind. Die Bildverarbeitung bedient sich Methoden der Mustererkennung bzw. des Pattern-Matchings, mit Hilfe derer bestimmte Strukturen innerhalb der Bildinformation identifiziert werden können. Es erfolgt insbesondere eine mathematische Beschreibung der Bildinformationen bzw. einzelner Objekte innerhalb des Bildes. Durch das Aufsuchen spezifischer visueller Merkmale lassen sich bestimmte Objekte mit hinreichender Genauigkeit identifizieren. Auf diese Weise kann der reale Ball 10 im von der Erfassungseinrichtung 12 gelieferten Bild von der Zuordnungseinrichtung 13 als solcher identifiziert werden. Hierzu zieht die Zuordnungseinrichtung 13 insbesondere Informationen über die Kontur und/oder die Farbe und/oder die Oberflächenstruktur und/oder die Bewegungseigenschaften des Balls 10 heran. Beispielsweise wird durch das typische Springen des Balls 10, welches sich in der Form der Trajektorie T wiederspiegelt, eine Unterscheidung von anderen runden Gegenständen erleichtert. Hierzu kann die Zuordnungseinrichtung 13 z.B. die Information über den Verlauf der Trajektorie T aus mehreren aufeinanderfolgenden Bildern gewinnen und für die Identifikation heranziehen. Es können auch bestimmte Konstellationen und Relativanordnungen verschiedener Objekte dazu dienen, eine Gefahrensituation als solche einzustufen. Im Ausführungsbeispiel kann dies dadurch geschehen, dass die Zuordnungseinrichtung 13 erkennt, dass der Ball 10 hinter einem Sichthindernis 7 hervorgetreten ist.

Bei der Warneinrichtung 8 handelt es sich im Ausführungsbeispiel um ein rotes Licht, das im Sichtbereich des Fahrzeugführers bei festgestellter Gefahr aufleuchtet. Alternativ oder zusätzlich können jedoch auch Einblendungen in die Windschutzscheibe (Head-Up-Display), akustische Warnsignale, Anzeigen auf dem Display eines Navigationssystems etc. vorgesehen sein.

Ein schematischer Ablauf der aufeinanderfolgenden Schritte ist in Fig. 4 nochmals illustriert. Dabei symbolisieren:
- Rechtecke (s1, s2, s3, s4, s5): Verfahrensschritte;
- Kreise (K1; K2): Objektkategorien, für die ein Unterstützen des Fahrzeugführers als notwendig eingestuft ist;
- Raute (K3): Objektkategorie, für die ein Unterstützen des Fahrzeugführers als nicht notwendig eingestuft ist; und
- Dreiecke (U1, U2): Unterkategorien.

Es seien einige Beispiele diskutiert:
(1) Objekt: Person 4
   - s1: Erfassen des visuellen Merkmals "xtremität"
   - s2: Zuordnen des -Merkmals "xtremität" zur Objektkategorie K1 gemäß erster vorgegebener Bewertung "xtremitäten deuten auf Menschen hin; Gefahrensituation!"
(2) Objekt: Verkehrsschild 5
   - s1: Erfassen des visuellen Merkmals ,,Zahl ,60' auf weißem Grund"
   - s2: Zuordnen des Merkmals ,,Zahl ,60' auf weißem Grund" zur Objektkategorie K2 gemäß erster vorgegebener Bewertung ,,Zahlen auf weißem Grund deuten auf Geschwindigkeitsbegrenzungen hin; Fahrer warnen!"
(3) Objekt: Fuchs
   - s1: Erfassen der visuellen Merkmale "Schwanz" und "Farbe Rot"
   - s2: Zuordnen der Merkmale "Schwanz" und "Farbe Rot" zur Objektkategorie K3 gemäß erster vorgegebener Bewertung "keine Identifikation aufgrund der Merkmale möglich"
   - s3: Zuordnen des Merkmals "Schwanz" zur Unterkategorie U1 gemäß zweiter vorgegebener Bewertung "Schwanz deutet auf Fuchs hin; es ist unwahrscheinlich, dass einem Fuchs ein Kind folgt; keine unterstützende Aktion erforderlich"
   - s4: Unterstützen des Fahrzeugführers entfällt
(4) Objekt: Ball
   - s1: Erfassen des visuellen Merkmals ,,runde Kontur"
   - s2: Zuordnen des Merkmals "runde Kontur" zur Objektkategorie K3 gemäß erster vorgegebener Bewertung "keine Identifikation aufgrund der Merkmale möglich"
   - s3: Zuordnen des Merkmals "runde Kontur" zur Unterkategorie U2 gemäß zweiter vorgegebener Bewertung "runde Kontur deutet auf Ball hin; es ist wahrscheinlich, dass einem Ball ein Kind folgt; Abbremsen!"
   - s4: Unterstützen des Fahrzeugführers durch automatisches Betätigen der Bremseinrichtung 14

Die Zuordnungseinrichtung 13 kann auch eine Datenbank umfassen, die von einer Bedienperson erstellt ist. Die Bedienperson legt dann die Bewertungskriterien fest, auf Basis derer die Zuordnung eines Objekts zu einer Objektkategorie erfolgen soll. Beispielsweise kann eine erste Datenbank für die Zuordnung zu den Objektkategorien unter Berücksichtigung einer ersten vorgegebenen Bewertung erstellt sein. Entsprechend kann eine Bedienperson auch eine zweite Datenbank für die Zuordnung zu den Unterkategorien erstellt haben, wodurch sie eine zweite Bewertung vorgibt. Es kann auch nur eine einzige Datenbank für die Zuordnungsvorschriften zu den Objekt- und Unterkategorien vorgesehen sein. Auf diese so vorgegebenen Zuordnungs-vorschriften kann dann die Zuordnungseinrichtung 13 zugreifen und abhängig von den erfassten visuellen Merkmalen eine Aktion veranlassen.

Die Vorrichtung 16 erhöht die Sicherheit des Kindes 9 erheblich, da .sie den Fahrzeugführer darin unterstützt, die in Fig. 2 und 3 dargestellte Gefahrensituation frühzeitig zu erkennen und eine Kollision zwischen Kraftwagen 1 und Kind 9 zu vermeiden. Mit aus dem Stand der Technik bekannten Vorrichtungen könnte eine Reaktion des Kraftwagens 1 frühestens dann erfolgen, wenn das Kind 9 selbst durch eine Bilderkennung zweifelsfrei identifiziert ist; das Kind 9 sich also bereits auf der Fahrbahn 2 und damit innerhalb der Gefahrenzone befindet. Die Vorrichtung 16 erlaubt, Vorboten einer Gefahrensituation, nämlich z.B. den Ball 10, zu identifizieren und eine Reaktion des Kraftwagens (z.B. einen Abbremsvorgang) einzuleiten, bevor sich das Kind 9 auf der Fahrbahn 2 befindet. Ein schwerwiegender Unfall lässt sich effektiv verhindern.

## Patentansprüche

1. Verfahren zum Unterstützen eines Fahrzeugführers eines Kraftwagens (1) mit den Schritten
- Erfassen mindestens eines visuellen Merkmals eines Objekts (4, 5, 6, 7, 9, 10);
- Zuordnen des Objekts (4, 5, 6, 7, 9, 10) zu einer von mindestens zwei Objektkategorien gemäß einer ersten vorgegebenen Bewertung anhand des mindestens einen visuellen Merkmals, wobei für eine erste der mindestens zwei Objektkategorien ein Unterstützen des Fahrzeugführers als notwendig eingestuft ist und für eine zweite der mindestens zwei Objektkategorien ein Unterstützen des Fahrzeugführers als nicht notwendig eingestuft ist;
**gekennzeichnet durch**
- Zuordnen des Objekts (10) der zweiten Objektkategorie auf Grundlage seines mindestens einen visuellen Merkmals in eine Unterkategorie nach einer zweiten vorgegebenen Bewertung; und
- Unterstützen des Fahrzeugführers gemäß der Unterkategorie.

2. Verfahren nach Anspruch 1,
**dadurch gekennzeichnet, dass**
sich das Objekt (4, 5, 6, 7, 9, 10) zumindest abschnittsweise senkrecht oder quer zur Fahrtrichtung (v1) des Kraftwagens (1) bewegt.

3. Verfahren nach Anspruch 1 oder 2,
**dadurch gekennzeichnet, dass**
das mindestens eine visuelle Merkmal des Objekts (4, 5, 6, 7, 9, 10) dessen Form und/oder Position und/oder Textur und/oder Farbe und/oder zeitliche Änderungen dieser Größen betrifft.

4. Verfahren nach einem der vorhergehenden Ansprüche,
**dadurch gekennzeichnet, dass**
das Unterstützen des Fahrzeugführers zumindest umfasst, den Fahrzeugführer, insbesondere akustisch und/oder optisch, zu warnen und/oder einen Abbremsvorgang des Kraftwagens (1) zumindest einzuleiten.

5. Verfahren nach einem der vorhergehenden Ansprüche,
**dadurch gekennzeichnet, dass**
die erste Objektkategorie zu Objekten (4, 6, 9) gehört, die nach vorgegebenen Kriterien unmittelbar durch den Kraftwagen (1) gefährdet sind und/oder eine unmittelbare Gefahr für den Kraftwagen **(1)** darstellen.

6. Verfahren nach einem der vorhergehenden Ansprüche,
**dadurch gekennzeichnet, dass**
das Zuordnen gemäß der zweiten vorgegebenen Bewertung in genau zwei Unterkategorien erfolgt, wobei die erste Unterkategorie Objekte (10) umfasst, denen eine potentielle Gefahrensituation zugeordnet ist und die zweite Unterkategorie Objekte (5, 7) umfasst, denen keine potentielle Gefahrensituation zugeordnet ist, und wobei für Objekte (10) der ersten Unterkategorie ein Unterstützen des Fahrzeugführers erfolgt und für Objekte (5, 7) der zweiten Unterkategorie kein Unterstützen des Fahrzeugführers erfolgt.

7. Verfahren nach einem der vorhergehenden Ansprüche,
**dadurch gekennzeichnet, dass**
das Zuordnen des Objekts (4, 5, 6, 7, 9, 10) zu einer Objektkategorie und/oder Unterkategorie über einen Algorithmus ausgeführt wird.

8. Vorrichtung (16) zum Unterstützen eines Fahrzeugführers, insbesondere für einen Kraftwagen (1), mit
- einer Erfassungseinrichtung (12) zum Erfassen mindestens eines visuellen Merkmals eines Objekts (4, 5, 6, 7, 9, 10);
- einer ersten Zuordnungseinrichtung (13) zum Zuordnen des Objekts (4, 5, 6, 7, 9, 10) zu einer von mindestens zwei Objektkategorien gemäß einer ersten vorgegebenen Bewertung anhand des mindestens einen visuellen Merkmals, wobei für eine erste der mindestens zwei Objektkategorien ein Unterstützen des Fahrzeugführers als notwendig eingestuft ist und für eine zweite der mindestens zwei Objektkategorien ein Unterstützen des Fahrzeugführers als nicht notwendig eingestuft ist;
**gekennzeichnet durch**
- eine zweite Zuordnungseinrichtung (13) zum Zuordnen des Objekts (10) der zweiten Objektkategorie auf Grundlage seines mindestens einen visuellen Merkmals in eine Unterkategorie nach einer zweiten vorgegebenen Bewertung; und
- eine Unterstützungseinrichtung (8, 14) zum Unterstützen des Fahrzeugführers gemäß der Unterkategorie.

9. Vorrichtung nach Anspruch 8,
**dadurch gekennzeichnet, dass**
die Erfassungseinrichtung (12) eine Kamera aufweist.

10. Vorrichtung nach Anspruch 8 oder 9,
**dadurch gekennzeichnet, dass**
die Unterstützungseinrichtung eine Warn- (8) und/oder Bremseinrichtung (14) aufweist.
